**Europäisches Patentamt**

**European Patent Office**

**Office européen des brevets**

(11) Veröffentlichungsnummer: **0 044 827**

**A2**

(12) # EUROPÄISCHE PATENTANMELDUNG

(21) Anmeldenummer: **81890123.3**

(22) Anmeldetag: **21.07.81**

(51) Int. Cl.³: **B 23 Q 41/00**

(30) Priorität: **22.07.80 AT 3778/80**

(43) Veröffentlichungstag der Anmeldung:
**27.01.82 Patentblatt 82/4**

(84) Benannte Vertragsstaaten:
**BE CH DE FR GB IT LI LU NL SE**

(71) Anmelder: **WIBA-Sondermaschinenbau- Gesellschaft m.b.H.**
**Baumgarting 12**
**A-4851 Gampern(AT)**

(72) Erfinder: **Wiesinger, Franz**
**Oberfeld 8**
**A-4870 Vöcklamarkt(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) **Fertigungsanlage, insbesondere für die Serienfertigung von Werkstücken, vorzugsweise für handwerkliche Betriebe.**

(57) Eine Fertigungsanlage für die Serienfertigung von Werkstücken weist mehrere Arbeitsstationen und eine Transportvorrichtung mit Haltestellen (3) auf, von denen die angehaltenen Werkstückträger (2) der Transportvorrichtung zur nächsten Haltestelle (3) weiterschickbar sind.

Um die durchgeführten Arbeitsschritte zu kontrollieren, ist anjedem Werkstückträger (2) ein offenes Kartenfach (4) für eine Kontrollkarte (5) vorgesehen und jeder Haltestelle (3) eine Stempeleinrichtung (6) zugeordnet, die einen beweglich gelagerten Halter (10) für einen Selbsteinfärbestempel (11) und ein Gestänge (14, 17,19) zum Bewegen des Halters (10) und zum Betätigen des Stempels (11) umfaßt.

EP 0 044 827 A2

## Fertigunganlage, insbesondere für die Serien-<br>fertigung von Werkstücken, vorzugsweise für<br>handwerkliche Betriebe

Die Erfindung betrifft eine Fertigungsanlage, insbesondere für die Serienfertigung von Werkstücken, vorzugsweise
für handwerkliche Betriebe, mit mehreren Arbeitsstationen
und einer für jede Arbeitsstation eine Haltestelle aufweisenden Transportvorrichtung, von welchen Haltestellen
angehaltene Werkstückträger der Transportvorrichtung
über eine Schaltvorrichtung zu einer nächsten Haltestelle
weiterschickbar sind.

In diesen Fertigungsanlagen werden die Werkstücke
mit einer geeigneten Transportvorrichtung von Arbeitsstation zu Arbeitsstation gebracht und in einzelnen Arbeitsschritten bearbeitet bzw. hergestellt. Da bei jeder
Arbeitsstation immer die gleichen oder ähnliche Arbeiten
durchzuführen sind, ergibt sich eine rasche und rationelle
Fertigung, was vor allem für handwerkliche Betriebe wegen
der teuren menschlichen Arbeitskraft von großer Bedeutung
ist. Ein solches fließbandartiges Arbeiten bringt aber
auch die Notwendigkeit einer Kontrolle der tatsächlich
durchgeführten Arbeiten mit sich, um einerseits eine
Überprüfung des fertigen Werkstückes zu ermöglichen und
anderseits die Arbeitsleistung jeder Arbeitskraft festhalten zu können. Bisher wird dazu nun für jede Arbeitsstation ein Arbeitsprotokoll ausgegeben, das von den Arbeitskräften händisch auszufüllen ist. Dies stellt allerdings eine recht zeitraubende und daher teure Tätigkeit
dar, die außerdem leicht zu Irrtümern führen kann und
im Endeffekt auch nur eine wenig übersichtliche und unbefriedigende Kontrolle ermöglicht.

Der Erfindung liegt daher die Aufgabe zugrunde,
diese Mängel zu beseitigen und eine Fertigungsanlage der eingangs geschilderten Art zu schaffen, die mit relativ geringem konstruktivem Mehraufwand eine einfache, exakte und objektive Kontrolle der durchgeführten Arbeitsschritte ohne zusätzliche Belästigung der Arbeitskräfte erlaubt.

Die Erfindung löst diese Aufgabe dadurch, daß an jedem Werkstückträger ein offenes Kartenfach od. dgl. zum Einstecken einer Kontrollkarte vorgesehen und jeder Haltestelle der Transportvorrichtung eine vorzugsweise an einem an der Haltestelle angeordneten Tragarm od. dgl. vorgesehene Stempeleinrichtung zugeordnet ist, wobei die Stempeleinrichtung einen gegen eine Rückstellkraft in Richtung auf den vom Kartenfach eines in der jeweiligen Haltestelle angehaltenen Werkstückträgers eingenommenen Platz anschlagbegrenzt beweglich gelagerten Halter für einen Selbsteinfärbestempel und ein vorzugsweise mittels eines Kolbentriebes vor der Freigabe eines Werkstückträgers für den Weitertransport durch die Schaltvorrichtung betätigbares Gestänge od. dgl. zum Bewegen des Halters und zum Betätigen des Stempels aufweist. Mit diesen Stempeleinrichtungen, in die beliebige handelsübliche Selbsteinfärbestempel einsetzbar sind, werden an jeder Arbeitsstation die den Werkstückträgern beigegebenen und so mit den zu bearbeitenden Werkstücken mittransportierten Kontrollkarten praktisch ohne ein Zutun der Arbeitskraft markiert, wodurch aus jeder dieser Kontrollkarten sofort ersichtlich ist, welche Arbeitsstationen das zugehörige Werkstück durchlaufen hat bzw. welche Arbeitsstationen für welche am Werkstück ausgeführten Arbeiten verantwortlich sind. Außerdem kann dann auf allen Kontrollkarten, beispielsweise durch computermäßiges Summieren, die Arbeitsleistung jeder Arbeitskraft abgelesen werden. Es ergibt sich eine wirklich objektive Kontrolle des Arbeitsablaufes, da der Weitertransport des Werkstückes von einer Haltestelle zur anderen erst nach Stempelung der Kontrollkarte in den Haltestellen ermöglicht wird, wobei vorzugsweise eine Betätigung der Schaltvorrichtung für die Transportanlage auch gleichzeitig das Gestänge der Stempeleinrichtung betätigt. Selbstverständlich könnte aber auch vor dem Bedienen der Schaltvorrichtung das Gestänge händisch betätigt werden, wozu nur ein einziger schneller Handgriff erforderlich wäre. Unabhängig davon, ob die Gestängebetätigung händisch oder mittels eines Kolbentriebes oder eines anderen Antriebes erfolgt, wird über das Gestänge sowohl der Halter des Stempels vorbewegt, bis der Stempel auf der Kontrollkarte im entsprechend offenen Kartenfach aufsetzt, welche Stellung durch einen Anschlag für die Haltebewegung definiert ist, als auch nach dem Aufsetzen des Stempels auf die Kontrollkarte die eigentliche Stempelbetätigung vorgenommen, wozu der am Anschlag anliegende Halter den Stempel festhält. Nach dem Stempeln geht das Gestänge zurück und der Halter mit dem Stempel wird durch die Rückstellkraft in seine Ausgangsposition gebracht, wodurch das Kartenfach bzw. der Werkstückträger freigegeben ist und die Haltestelle verlassen kann. Als Rückstellkraft kann bei entsprechender Lagerung des Halters das Eigengewicht dienen, aber auch der Einsatz einer eigenen Rückstellfeder ist durchaus möglich. Die Zuordnung einer Stempeleinrichtung für jede Haltestelle einerseits und einer Kontrollkarte für jeden Werkstückträger anderseits erlaubt auf einfache Weise die Automatisierung der gewünschten Kontrolle, was eine zusätzliche Belastung für die Arbeitskräfte vermeidet und darüber hinaus eine exakte und gerechte Überprüfung der Fertigung bzw. Arbeitsleistung gewährleistet. Die spezielle Ausgestaltung der Kontrollkarte bzw. der Stempeleinrichtung ist an die jeweils vorhandenen Gegebenheiten ohne Schwierigkeiten anzupassen und keinesfalls an eine bestimmte Konstruktion gebunden.

In einer günstigen Weiterbildung der Erfindung weist die Stempeleinrichtung eine relativ zum Halter bewegliche Führung auf, die über das Gestänge zur Fixierung eines Werkstückträgers während des Stempelvorganges an den jeweils in der Haltestelle angehaltenen Werkstückträger ansetzbar ist. Diese Führung erlaubt die exakte Zuordnung von Stempel und Kartenfach bzw. Kontrollkarte, um sicherzustellen, daß die Markierung der Kontrollkarte durch den Stempel genau an der gewünschten Stelle erfolgt. Dazu wird über das Gestänge für die Betätigung des Halters bzw. des Stempels die in ihrer Form an die Ansetzstelle des Werkstückträgers angepaßte Führung sozusagen auf den Träger aufgesteckt, wobei dieser die für das Stempeln genau ausgerichtete Lage gebracht wird. Da die Führung den Werkstückträger erfassen muß, bevor der Stempel aufgesetzt wird, ist die Führung relativ zum Halter bzw. zum Stempel beweglich, so daß sie entsprechend früher als der Stempel den Werkstückträger erreichen kann. Beim Betätigen des Gestänges wird daher zuerst die Führung am Werkstückträger angesetzt, dann der Halter mit dem Stempel bis zur Kartenoberfläche gebracht und hierauf der Stempel selbst betätigt. Das Zurückziehen des Gestänges bewirkt ein Loslassen des Stempels, dadurch ein Wegbewegen des Halters auf Grund der Rückstellkraft und zusätzlich auch ein Zurückziehen der Führung vorzugsweise mit dem Gestänge selbst.

Vorteilhaft ist es auch, wenn erfindungsgemäß der Halter quer zur Aufsetzrichtung des Stempels auf die Kontrollkarte lageverstellbar ist. Durch diese Lageverstellung kann der Punkt der Stempelung auf der Kontrollkarte entsprechend der gewünschten Einteilung dieser Kontrollkarte, auf der ja die Markierungen aller Arbeitsstationen Platz finden müssen, gewählt werden.

Nach einer Weiterbildung der Erfindung ergibt sich eine zweckmäßige Konstruktion dadurch, daß das Gestänge der Stempeleinrichtung einen Kipphebel aufweist, an dessen einem Ende der Kolbentrieb angreift und an dessen anderem Ende ein in Kulissenöffnungen zweier die Führung bildender, schwenkbar gelagerter Seitenwangen eingreifender Querbolzen sitzt, in dessen Bewegungsbahn der mit seinem Halter zwischen den Seitenwangen angeordnete und um eine zur Seitenwangenschwenkachse parallele Achse anschlagbegrenzt schwenkbare Stempel liegt. Der Kipphebel erlaubt eine platzsparende Anordnung der Stempeleinrichtung im Bereich der Haltestellen, da er eine winkelige Gestängeführung mit sich bringt. Außerdem werden mit dem Querbolzen alle vom Gestänge durchzuführenden Funktionen auf einfache Weise ausgeübt, denn ein Vorkippen des Hebels bringt, bedingt durch das Eingreifen des Querbolzens in die Kulissenöffnungen der Seitenwangen, diese zu einem Verschwenken in ihre Arbeitsstellung, wo sie den entsprechenden Teil des Werkstückträgers zwischen sich fassen. Außerdem erreicht der Querbolzen nach entsprechendem Schwenkweg den Kopfteil des Stempels und schwenkt so den Stempel mit seinem Halter bis dieser seinen Anschlag erreicht, in welcher Position der Stempel auf der Kontrollkarte aufsitzt, worauf dann wegen des am Anschlag anliegenden Halters bei Weiterbewegen des Querbolzens der Kopfteil des Stempels vorgedrückt und dadurch der Stempel betätigt wird. Ein Zurückkippen des Kipphebels bringt über den Querbolzen die Führung wieder in die Ausgangslage, wobei außerdem der Querbolzen den Kopfteil des Stempels freigibt und so die Rückstellkraft den Halter mit dem Stempel ebenfalls in die Ausgangsposition zurückschwenkt.

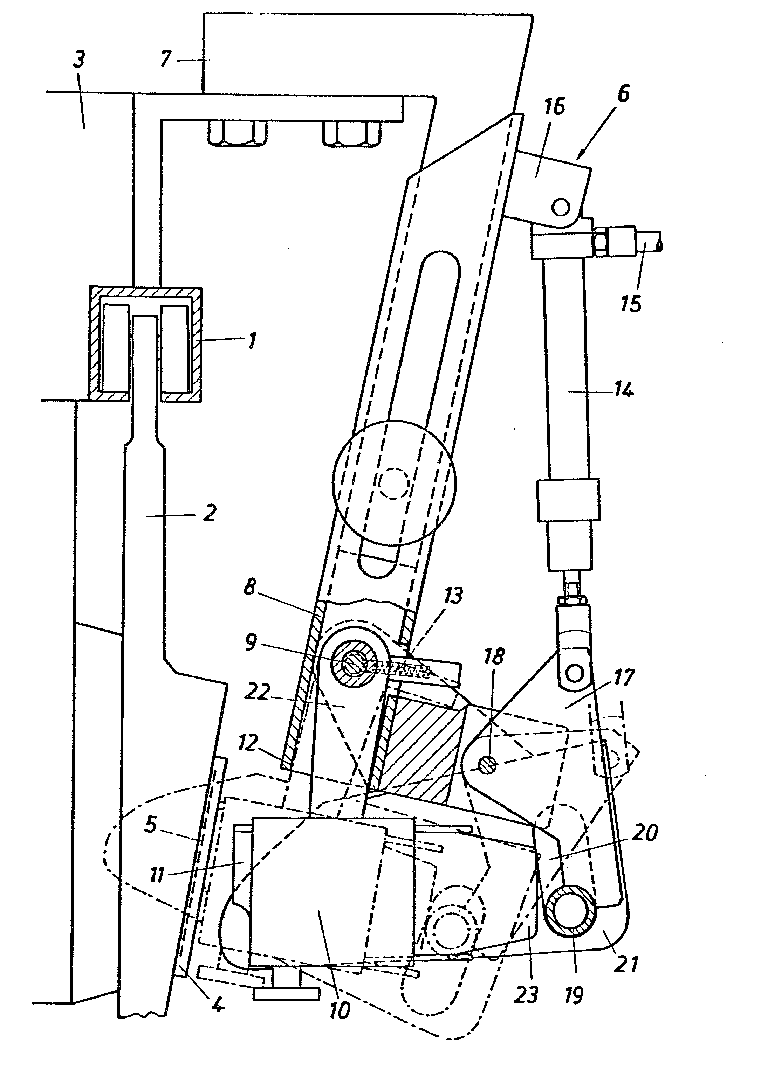

In der Zeichnung ist eine erfindungsgemäße Stempeleinrichtung beispielsweise in teilgeschnittener Seitenansicht dargestellt.

Die lediglich mit einer Förderschiene 1 und einem Werkstückträger 2 angedeutete Transportanlage einer nicht weiter dargestellten Serienfertigungseinrichtung besitzt für jede Arbeitsstation dieser Serienfertigungseinrichtung eine Haltestelle 3, in der die Werkstückträger 2 meist selbständig angehalten und nach Bearbeitung der von ihnen mitgeführten Werkstücke durch Betätigen einer ebenfalls nicht weiter dargestellten Schaltvorrichtung zur nächsten Haltestelle weitergeschickt werden. Zur automatischen Überprüfung des Arbeitsablaufes in einer solchen Serienfertigungseinrichtung ist nun an jedem Werkstückträger 2 ein Kartenfach 4 vorgesehen, das von außen zugänglich eine Kontrollkarte 5 aufnimmt. Außerdem ist jeder Haltestelle 3 eine eigene Stempeleinrichtung 6 zugeordnet, mit der die Kontrollkarte 5 im Kartenfach 4 eines jeden Werkstückträgers 2 markiert wird, bevor dieser die Haltestelle 3 wieder verläßt. Die Stempeleinrichtung 6 besteht aus einem an der Haltestelle 3 montierten Tragarm 7, auf dem längsverschiebbar eine Trägerhülse 8 befestigt ist. Um eine Querachse 9 dieser Trägerhülse 8 ist ein Halter 10 für einen Selbsteinfärbestempel 11 schwenkbar gelagert, wobei die Trägerhülse 8 Anschläge 12 zur Begrenzung der Schwenkbewegung des Halters 10 bildet. Der Halter 10 ist entlang der Schwenkachse 9 verschiebbar und über eine Rasteinrichtung 13 in verschiedenen Lagen entlang der Achse 9 einrastbar. Diese Verstellung entlang der Schwenkachse 9 und die quer dazu mögliche Verschiebung der Trägerhülse 8 gegenüber dem Tragarm 7 erlaubt eine Lageeinstellung des Halters 10 und damit des Stempels 11, um den gewünschten Platz für die Markierung der Kontrollkarte 5 wählen zu können.

Zur Betätigung der Stempeleinrichtung 6 ist ein Pneumatikzylinder 14 vorgesehen, der über eine entsprechende Druckmittelleitung 15 aus- und einfahrbar ist, wobei die Beaufschlagung dieses Zylinders 14 mit der Betätigung der Schaltvorrichtung für die Transportanlage koordiniert ist. Der Pneumatikzylinder 14 stützt sich einerseits an einem Lagerbock 16 der Trägerhülse 8 ab und greift anderseits an einem Kipphebel 17 an, der über das Kipplager 18 ebenfalls an der Trägerhülse 8 angelenkt ist. Am dem Pneumatikzylinder 14 abgewandten Ende des Kipphebels 17 sitzt ein Querbolzen 19, der in Kulissenöffnungen 20 zweier Seitenwangen 21 eingreift (der Übersichtlichkeit halber ist von den beiden gleichen, parallelen Seitenwangen 21 die vordere weggelassen). Diese Seitenwangen 21 sind über Lagerlaschen 22 an der Querachse 9 der Traghülse 8 schwenkbar angesetzt und nehmen den Halter 10 zwischen sich auf. Die Wangen 21 ergeben zusammen eine Führung, die auf den Werkstückträger 2 aufsteckbar ist und diesen für den Stempelvorgang fixiert.

Soll nun ein Werkstückträger 2 von einer Haltestelle 3 zu einer anderen weitergeschickt werden, wird vor dem Freigeben des Weitertransportes die Stempeleinrichtung 6 zum Markieren der Kontrollkarte 5 im Kartenfach 4 des Werkstückträgers 2 betätigt. Dazu wird der Pneumatikzylinder 14 beaufschlagt, der ausfährt und dabei den Kipphebel 17 gemäß der Zeichnung abwärts schwenkt. Der mit diesem Kipphebel 17 mitbewegte Querbolzen 19 drückt dabei die Seitenwangen 21 in Richtung auf den Werkstückträger 2, wobei die Kulissenöffnung 20 die entsprechende Relativbewegung zwischen Wangen 21 und Querbolzen 19 erlaubt. Nach einem gewissen Schwenkweg des Querbolzens 19 und damit auch der Seitenwangen 21 trifft der Querbolzen 19 auf den Kopfteil 23 des Stempels 11 und bewegt dadurch den Stempel 11 und den Halter 10 um die Schwenkachse 9 in Richtung auf das Kartenfach 4, bis der Halter 10 die entsprechende Anschlagfläche 12 an der Trägerhülse 8 erreicht hat. In dieser Stellung liegt der Stempel 11 auch an der Oberfläche der Kontroll-karte 5 auf, und ein Weiterbewegen des Querbolzens 19 bewirkt das Niederdrücken des Kopfteiles 23 des Stempels 11 und damit den Stempelvorgang. Bevor der Stempel 11 noch auf die Kontrollkarte 5 aufgesetzt hat, ist durch die gleichzeitig erfolgende Schwenkbewegung der Seitenwangen 21 der Werkzeugträger 2 gefaßt und in die für den Stempelvorgang richtige Lage gebracht worden (strichpunktierte Darstellung).

Nach dem Ausfahren des Pneumatikzylinders 14, das zur Markierung der Kontrollkarte 5 geführt hat, wird der Pneumatikzylinder 14 wieder zurückgezogen, wodurch auch der Kipphebel 17 zurückschwenkt und damit die Seitenwangen 21 vom Werkstückträger 2 abheben. Der Querbolzen 19 gibt dabei auch den Kopfteil 23 des Stempels 11 frei, die Belastung des Stempels bzw. des Halters 10 ist damit beendet und der entsprechend pendelnd gelagerte Halter 10 schwenkt unter seinem Eigengewicht in seine Ausgangsposition zurück, wodurch auch der Stempel 11 von der Kontrollkarte 5 abhebt und der Werkstückträger 2 vollkommen freigegeben ist. Nunmehr kann in üblicher Weise der Weitertransport des Werkstückträgers 2 zur nächsten Haltestelle erfolgen.

Patentansprüche:

1. Fertigungsanlage, insbesondere für die Serienfertigung von Werkstücken, vorzugsweise für handwerkliche Betriebe, mit mehreren Arbeitsstationen und einer für jede Arbeitsstation eine Haltestelle aufweisenden Transportvorrichtung, von welchen Haltestellen angehaltene Werkstückträger der Transportvorrichtung über eine Schaltvorrichtung zu einer nächsten Haltestelle weiterschickbar sind, dadurch gekennzeichnet, daß an jedem Werkstückträger (2) ein offenes Kartenfach (4) od. dgl. zum Einstecken einer Kontrollkarte (5) vorgesehen und jeder Haltestelle (3) der Transportvorrichtung eine vorzugsweise an einem an der Haltestelle (3) angeordneten Tragarm (7) od. dgl. vorgesehene Stempeleinrichtung (6) zugeordnet ist, wobei die Stempeleinrichtung (6) einen gegen eine Rückstellkraft in Richtung auf den vom Kartenfach (4) eines in der jeweiligen Haltestelle angehaltenen Werkstückträgers (2) eingenommenen Platz anschlagbegrenzt beweglich gelagerten Halter (10) für einen Selbsteinfärbestempel (11) und ein vorzugsweise mittels eines Kolbentriebes (14) vor der Freigabe eines Werkstückträgers für den Weitertransport durch die Schaltvorrichtung betätigbares Gestänge (14, 17, 19) od. dgl. zum Bewegen des Halters (10) und zum Betätigen des Stempels (11) aufweist.

2. Fertigungsanlage nach Anspruch 1, dadurch gekennzeichnet, daß die Stempeleinrichtung (6) eine relativ zum Halter (10) bewegliche Führung (21) aufweist, die über das Gestänge (14, 17, 19) zur Fixierung eines Werkstückträgers (2) während des Stempelvorganges an dem jeweils in der Haltestelle (3) angehaltenen Werkstückträger (2) ansetzbar ist.

3. Fertigungsanlage nach Anspruch 1 oder 2, dadurch gekennzeichnet, daß der Halter (10) quer zur Aufsetzrichtung des Stempels (11) auf die Kontrollkarte (5) lageverstellbar ist.

4. Fertigungsanlage nach einem der Ansprüche 1 bis 3, dadurch gekennzeichnet, daß das Gestänge der Stempeleinrichtung (6) einen Kipphebel (17) aufweist, an dessen einem Ende der Kolbentrieb (14) angreift und an dessen anderem Ende ein in Kulissenöffnungen (20) zweier die Führung bildender, schwenkbar gelagerter Seitenwangen (21) eingreifender Querbolzen (19) sitzt, in dessen Bewegungsbahn der mit seinem Halter (10) zwischen den Seitenwangen (21) angeordnete und um eine zur Seitenwangenschwenkachse parallele Achse (9) anschlagbegrenzt schwenkbare Stempel (11) liegt.